# EUROPÄISCHE PATENTANMELDUNG

(11) **EP 3 505 224 A1**
(43) Veröffentlichungstag der Anmeldung: **03.07.2019**
(21) Anmeldenummer: 17210748.4
(22) Anmeldetag: 27.12.2017
(51) Int. Cl.: B01D 1/18, B01D 1/24, B01J 2/26, B01J 2/28, B01J 2/30, C02F 1/10, C02F 1/26, C02F 1/52, F23G 7/00, B01D 9/00

(54) **VORRICHTUNG UND VERFAHREN MIT EINER FÖRDEREINRICHTUNG ZUM ABZUG VON FLÜSSIGEM SALZ**

(71) Anmelder: Oschatz Energy and Environment GmbH, 45143 Essen (DE)
(72) Erfinder: HÜNNIG, Herbert, 46348 Raesfeld (DE)
(74) Vertreter: Andrejewski - Honke Patent- und Rechtsanwälte Partnerschaft mbB

(57) **Zusammenfassung**

Eine Vorrichtung zum Abzug von flüssigem Salz umfasst einen Heizraum mit einem Eingang zur Einführung eines salzhaltigen Stoffes. Der Heizraum ist mit einem Ablauf für eine Salzschmelze verbunden, wobei der Ablauf ein Ablaufende aufweist. Unterhalb des Ablaufendes ist eine Fördereinrichtung angeordnet, wobei die Fördereinrichtung eine Stromrichtung bestimmt. Stromaufwärts des Ablaufendes ist eine Streuöffnung zum Bestreuen der Fördereinrichtung mit einem Schüttgut angeordnet.

## Beschreibung

Die Erfindung betrifft eine Vorrichtung und ein Verfahren zum Abzug von flüssigem Salz, insbesondere aus Anlagen zur Reinigung von Abwässern, mit einem Heizraum, wobei der Heizraum einen Eingang zur Einführung eines salzhaltigen Stoffes aufweist, wobei der Heizraum mit einem Ablauf für eine Salzschmelze verbunden ist, wobei der Ablauf ein Ablaufende aufweist.

In EP 0 340 616 A1 ist eine derartige Vorrichtung beschrieben. Ein salzhaltiger Stoff in Form eines Abwassers wird in einen Heizraum eingeführt, in welchem eine Temperatur oberhalb des Schmelzpunktes des im Abwasser enthaltenen Salzes herrscht. Hierdurch verdampft der Wasseranteil des Abwassers schlagartig, während das Salz verflüssigt und aufgrund der schlagartigen Wasserverdampfung als Salznebel vom Wasserdampf mitgerissen wird. Im Heizraum werden brennbare Bestandteile des Abwassers durch eine Nachverbrennung verbrannt. Bei diesem Vorgang werden zahlreiche giftige bzw. umweltschädliche Verbindungen in ihre Einzelelemente zerlegt, so dass der salzhaltige Stoff gereinigt wird. Der Salznebel kondensiert als Salzschmelze an den Wänden des Heizraumes. Die Salzschmelze läuft von dort nach unten in ein Becken, welches mit einem Ablauf versehen ist. Über ein Ablaufende des Ablaufes fließt die Salzschmelze in einen verfahrbaren Aufnahmebehälter.

Damit allerdings liegt das Salz noch nicht als festes, schüttfähiges Gut und folglich auch nicht in einer wirtschaftlich weiterverwendbaren bzw. weitertransportierbaren Form vor. Es ist daher aus der Praxis bekannt, die gereinigte Salzschmelze zunächst in Wasser zu kühlen. Durch die Wasserkühlung löst sich das Salz in Wasser, so dass im Anschluss aufwendige Trennverfahren angewendet werden müssen, um trockenes, schüttfähiges Salz zu erhalten.

Ferner ist aus der Praxis bekannt, die Salzschmelze in eine Kühlschnecke fließen zu lassen, in welcher das Salz eine feste Form einnimmt. Die Schnecke ist so ausgebildet, dass das erstarrende Salz fortlaufend von dem gekühlten Schneckengewinde geschabt wird. Im Ergebnis liegt nach Durchlaufen der Kühlschnecke ein festes, schüttfähiges Salz vor. Allerdings kommt es auch in Randbereichen der Kühlschnecke zu stetig wachsenden Ablagerungen, so dass nach verhältnismäßig kurzer Zeit - mithin bereits nach einigen Stunden - der gesamte Prozess angehalten und die Kühlschnecke gereinigt werden muss, so dass die Betriebsverfügbarkeit hierunter leidet. Eine automatische, kontinuierliche Reinigung der Kühlschnecke auch in den Randbereichen würde die Kühlschnecke deutlich komplexer und teurer sowie wartungsintensiver werden lassen.

Der Erfindung liegt daher die technische Aufgabe zugrunde, eine Vorrichtung zum Abzug von flüssigem Salz anzugeben, durch welche mit geringem Konstruktions- bzw. Herstellungs- bzw. Wartungsaufwand schüttfähiges Salz aus der Salzschmelze hergestellt wird. Insbesondere soll die Betriebsverfügbarkeit der Vorrichtung erhöht werden.

Zur Lösung der technischen Aufgabe lehrt die Erfindung eine Vorrichtung zum Abzug von flüssigem Salz, insbesondere für Anlagen zur Reinigung von Abwässern, mit einem Heizraum, wobei der Heizraum einen Eingang zur Einführung eines salzhaltigen Stoffes aufweist, wobei der Heizraum mit einem Ablauf für eine Salzschmelze verbunden ist, wobei der Ablauf ein Ablaufende aufweist, wobei unterhalb des Ablaufendes eine Fördereinrichtung angeordnet ist, wobei die Fördereinrichtung eine Stromrichtung bestimmt, wobei stromaufwärts des Ablaufendes, und vorzugsweise oberhalb der Fördereinrichtung, eine Streuöffnung zum Bestreuen der Fördereinrichtung mit einem Schüttgut angeordnet ist.

Es ist bevorzugt, dass die Stromrichtung der Fördereinrichtung einen waagerechten Richtungsanteil aufweist. Vorzugsweise ist die Stromrichtung der Fördereinrichtung rein waagerecht oder stromabwärts geneigt. Der Begriff "Strom" meint insbesondere die Bewegung des Schüttgutes bzw. eines/des Klumpen-Schüttgut-Gemisches bzw. fester Stoffe. Demgegenüber wird eine Bewegung der Salzschmelze vorzugsweise als "Fluss" ausgedrückt. Beispielsweise ist der Heizraum flussaufwärts des Ablaufes angeordnet. Zweckmäßigerweise ist die Fördereinrichtung flussabwärts des Ablaufes befindlich.

Der Begriff "Schüttgut" meint insbesondere ein körniges oder stückiges Gemenge, das in einer schüttfähigen Form vorliegt. Vorzugsweise ist das Schüttgut körnig ausgebildet, wobei die durchschnittliche Korngröße vorzugsweise kleiner als 10 mm, und weiter vorzugsweise kleiner als 7 mm und besonders vorzugsweise kleiner als 5 mm ist. Das Schüttgut umfasst vorzugsweise ein Mineral und besonders vorzugsweise ein Salz oder einen Sand. Gemäß einer ganz besonders bevorzugten Ausführungsform weist das Schüttgut ein Material auf, welches identisch ist mit einem Material der Salzschmelze. Besonders vorteilhaft ist es, wenn das Material der Salzschmelze identisch bzw. im Wesentlichen identisch ist mit dem Material des Schüttgutes.

Der Erfindung liegt die Erkenntnis zugrunde, dass eine trockene Abkühlung der Salzschmelze mittels einer verhältnismäßig kalten Fördereinrichtung aufgrund der entstehenden Salzablagerungen stets problematisch ist. Allerdings wurde gefunden, dass ein Schüttgutbett auf der Fördereinrichtung sowohl eine Abkühlung als auch zugleich eine Vermeidung von Salzablagerungen erreicht. So erstarrt die Salzschmelze innerhalb des Schüttgutbettes und kühlt langsam weiter aus. In der Folge liegen nach Durchlaufen der Fördereinrichtung Klumpen erstarrter Salzschmelze vor, welche sehr leicht weiterbearbeitet bzw. weiterbefördert werden können. Damit entfällt die Notwendigkeit eines aufwendigen Trennverfahrens, um das Salz aus dem Wasser zu entfernen. Ebenso entfällt die Notwendigkeit einer sehr komplexen und wartungsintensiven, sich selbstreinigenden Fördereinrichtung. Hierdurch wird sowohl der Konstruktions-, der Herstellungs- als auch der Wartungsaufwand verringert bzw. die Betriebsverfügbarkeit erhöht und die erfindungsgemäße Aufgabe gelöst.

Es ist ganz besonders bevorzugt, wenn die Fördereinrichtung und/oder die Streuöffnung und/oder die Vorrichtung zum Abzug von flüssigem Salz so ausgebildet ist/sind, dass das auf die Fördereinrichtung gestreute Schüttgut ein - vorzugsweise in Stromrichtung wanderndes - Schüttgutbett bildet. Der Begriff "wandern" meint insbesondere, dass die Einzelteile des Schüttgutes sich relativ zur Fördereinrichtung bzw. zu Bestandteilen der Fördereinrichtung bewegen, wobei zweckmäßigerweise das Schüttgutbett in seiner Gesamtheit aufgrund stetigen Bestreuens der Fördereinrichtung sich beständig auf der Fördereinrichtung befindet. Es ist sehr bevorzugt, dass die Fördereinrichtung eine solche Länge aufweist, dass die Salzschmelze am stromabwärtigen Ende der Fördereinrichtung zu Klumpen erstarrt ist.

Es liegt im Rahmen der Erfindung, dass die Fördereinrichtung einen Endlosförderer umfasst. Der Endlosförderer ist vorzugsweise ein Förderband, wobei das Förderband beispielsweise durchgängig ausgebildet ist oder aus einer Vielzahl an gleichartigen Elementen bestehen kann. Die gleichartigen Elemente können beispielsweise hitzebeständige Metallplatten sein. Vorzugsweise umfasst die Fördereinrichtung bzw. der Endlosförderer Seitenwände zwecks Fixierung des Schüttgutbettes. Gemäß einer bevorzugten Ausführungsform sind die Seitenwände ortsfest. Alternativ ist es möglich, dass die Seitenwände an dem Förderband befestigt sind, so dass die Seitenwände wie auch der Rest des Förderbandes um die Fördereinrichtung bzw. um den Endlosförderer umlaufend verfahrbar sind. Zweckmäßigerweise weisen die gleichartigen Elemente ein flächiges Bodenteil auf.

Gemäß einer bevorzugten Ausführungsform umfasst die Fördereinrichtung ein vibrierendes Element, so dass ein Schüttgutbett auf der Fördereinrichtung stromabwärts förderbar ist. Das vibrierende Element ist beispielsweise eine Rinne bzw. Schwingrinne. Das vibrierende Element ist bevorzugt stromabwärts geneigt.

Es ist sehr bevorzugt, dass der Heizraum einen Heizraumbrenner aufweist. Der Heizraumbrenner bzw. der Eingang bzw. die Eingänge zur Einführung des salzhaltigen Stoffes sind vorzugsweise so ausgerichtet, dass ein Strahl des salzhaltigen Stoffes auf eine Brennflamme des Heizbrenners gerichtet ist. Der Brenner ist bevorzugt so ausgebildet, dass eine Temperatur von wenigstens 700 °C/800 °C/900 °C erreicht wird. Eine Höchsttemperatur des Heizraumbrenners beläuft sich vorzugsweise auf 1.600 °C/1.400 °C/1.200 °C. Der Brenner ist bevorzugt an einem stromaufwärtigen Ende des Heizraums angeordnet. Vorteilhafterweise umfasst der Heizraum ein Gebläse zwecks Absaugung eines Gases bzw. Gasgemisches bzw. salzhaltigen Wasserdampfstroms aus dem Heizraum, wobei das Gebläse zweckmäßigerweise an einem ausgangsseitigen Ende des Heizraums angeordnet ist.

Sehr vorzugsweise weist der Heizraum mit Wandrohren versehene Heizraumwände auf. Die Wandrohre sind zweckmäßigerweise mit Wasser befüllbar bzw. mit Wasserdampf gefüllt. Die Wandrohre verlaufen bevorzugt von oben nach unten und besonders bevorzugt senkrecht. Die Heizraumwände bzw. die Wandrohre sind zweckmäßigerweise so ausgebildet, dass eine Temperatur von wenigstens 150 °C/175 °C bzw. höchstens von 320 °C/300 °C/280 °C an den Heizraumwänden vorliegt. Die Wandrohre können an einer Außenseite der Heizraumwände angeordnet sein oder aber selbst die Heizraumwände bilden. Bevorzugt weisen die Heizraumwände an ihrer Innenseite eine Salzwand auf. Es ist vorteilhaft, dass der Heizraum an seinem unteren Ende einen Boden aufweist, auf welchem sich die Salzschmelze sammeln kann.

Gemäß einer besonders bevorzugten Ausführungsform ist stromabwärts des Ablaufendes bzw. der Fördereinrichtung eine Trennvorrichtung angeordnet, welche so ausgebildet ist, dass das Schüttgut von Klumpen erstarrter Salzschmelze trennbar ist. Vorzugsweise umfasst die Trennvorrichtung ein Sieb, wobei das Sieb weiter vorzugsweise ein bewegliches Sieb ist. Das Sieb ist vorteilhafterweise zwecks Weiterförderung geneigt. Das Sieb ist bevorzugt mit einem mechanischen Antrieb dergestalt versehen, dass es in einen Rüttelzustand versetzbar ist. Das Sieb weist vorzugsweise eine Lochung auf, wobei die Lochung zweckmäßigerweise in einem stromaufwärtigen Bereich des Siebes angeordnet ist. Die Lochung des Siebes ist vorteilhafterweise so ausgestaltet, dass das Schüttgut hindurchfällt, nicht aber die Klumpen erstarrter Salzschmelze. Gemäß einer besonders bevorzugten Ausgestaltung weist die Trennvorrichtung ein Schwingrinnensieb mit Neigung zwecks Weiterförderung auf, wobei in einem oberen Bereich des geneigten Schwingrinnensiebes die Lochung angeordnet ist. Vorteilhafterweise ist unterhalb der Trennvorrichtung ein Trichter zur Sammlung des Schüttgutes angeordnet. Es liegt im Rahmen der Erfindung, dass unterhalb der Trennvorrichtung - und bevorzugt seitlich von dem Trichter - ein Klumpenbehältnis, z. B. ein Container oder Big Bag, angeordnet ist.

Es ist sehr vorteilhaft, wenn unterhalb und vorzugsweise direkt unterhalb der Fördereinrichtung ein Schüttgutsammler angeordnet ist. Der Schüttgutsammler ist bevorzugt so ausgebildet, dass er von der Fördereinrichtung heruntergefallenes Schüttgut einsammelt. Der Schüttgutsammler ist bevorzugt motorisch angetrieben und kann beispielsweise als Förderschnecke ausgebildet sein. Im Ergebnis weist die Fördereinrichtung einen sehr kompakten Unterbau auf. Der Schüttgutsammler kann aber auch in einer nach unten zulaufenden Verjüngung einer Wanne bestehen, so dass von der Fördereinrichtung herunterfallendes Schüttgut mittels bloßer Schwerkraft eingesammelt wird. Es ist bevorzugt, dass der Schüttgutsammler so ausgebildet ist, dass das von den Klumpen erstarrter Salzschmelze getrennte Schüttgut einem Ausgang für das Schüttgut zugeführt wird. Der Schüttgutsammler befördert zweckmäßigerweise das Schüttgut zu einem Schüttgutausgang eines/des Gehäuses bzw. zu einer Zellenradschleuse.

Vorzugsweise umfasst die Vorrichtung eine Scheidewand. Die Scheidewand ist bevorzugt unterhalb der Fördereinrichtung angeordnet. Die Scheidewand ist bevorzugt so ausgebildet, dass ein von dem stromabwärtigen Ende der Fördereinrichtung herunterfallendes Klumpen-Schüttgut-Gemisch nicht in einen Einzugsbereich des Schüttgutsammlers hineinfällt. Zweckmäßigerweise ermöglicht die Scheidewand eine Trennung des von der Fördereinrichtung herunterrieselnden Schüttgutes von einem/dem Klumpen-Schüttgut-Gemisch, welches an dem stromabwärtigen Ende der Fördereinrichtung herunterfällt. Vorzugsweise wird das Klumpen-Schüttgut-Gemisch vom stromabwärtigen Ende der Fördereinrichtung einer/der Trennvorrichtung bzw. einem Klumpen-Schüttgut-Gemisch-Ausgang eines/des Gehäuses bzw. einer/der Zellenradschleuse zugeführt.

Es ist besonders bevorzugt, dass die Vorrichtung bzw. der Ablauf bzw. das Ablaufende einen Siphon zur Vermeidung eines Außenlufteintrittes am Ablaufende aufweist. Vorzugsweise ist der Siphon in eine Öffnung einer/der Ablaufwand eingesetzt, wobei sich die Öffnung vorzugsweise an einer Unterseite des Ablaufes befindet. Es ist zweckmäßig, dass sich der Siphon bzw. die Öffnung unterhalb eines Endes einer/der Ablaufrinne angeordnet ist/sind. Es ist bevorzugt, dass der Siphon beheizbar und vorzugsweise elektrisch beheizbar ausgebildet ist. Gemäß einer besonders bevorzugten Ausführungsform ist der Siphon mittels einer Induktionsheizung elektrisch beheizbar. Es ist möglich, dass der Siphon eine elektrische Widerstandsheizung aufweist.

Es ist möglich, dass das Ablaufende, die Streuöffnung, die Fördereinrichtung, die Scheidewand, die Trennvorrichtung und/oder der Schüttgutsammler durch ein Gehäuse von der Umgebung getrennt sind. Vorteilhafterweise ist die Trennvorrichtung außerhalb des Gehäuses angeordnet. Vorzugsweise wird die Fördereinrichtung bzw. der Schüttgutsammler bzw. die Scheidewand von dem Gehäuse umschlossen. Das Gehäuse weist bevorzugt wenigstens einen Ausgang für das Schüttgut auf. Vorteilhafterweise umfasst das Gehäuse einen Ausgang für ein Klumpen-Schüttgut-Gemisch. Es ist bevorzugt, dass der Ausgang bzw. die Ausgänge mit einer bzw. jeweils mit einer Zellenradschleuse versehen sind.

Gemäß einer besonders vorteilhaften Ausführungsform ist der Ablauf wenigstens entlang eines Abschnittes von einer Ablaufwand umschlossen und vorzugsweise vollständig umlaufend umschlossen. Die Ablaufwand weist vorzugsweise wenigstens eine Schicht aus einem keramischen Material auf und ist beispielsweise gemauert. Gemäß einer vorteilhaften Ausführungsform umschließt die Ablaufwand wenigstens abschnittsweise ein Heizelement, wobei das Heizelement vorteilhafterweise ein Brenner (Ablaufbrenner) ist. Vorzugsweise umfasst der Ablauf bzw. die Ablaufwand wenigstens einen Temperatursensor zwecks Regelung des Brenners, um die Temperatur innerhalb des Ablaufes stets über der Schmelztemperatur des Salzes zu halten. Der Ablauf weist bevorzugt eine Wandöffnung in einer Heizraumwand - bevorzugt in einer Nähe des Bodens des Heizraumes - auf. Die Wandöffnung stellt vorzugsweise eine fluidische Verbindung her zwischen einem unteren Bereich des Heizraumes bzw. dem Boden des Heizraumes einerseits und dem Ablaufende andererseits. Es ist zweckmäßig, dass die Ablaufwand an dem Heizraum bzw. an den Heizraumwänden außen anliegt.

Es ist bevorzugt, dass zwischen der Fördereinrichtung und der Streuöffnung eine Rückförderstrecke zur Rückförderung des Schüttgutes angeordnet ist. Die Rückförderstrecke ist vorzugsweise zwischen einem stromabwärtigen Ende der Fördereinrichtung und einem stromaufwärtigen Ende der Streuöffnung angeordnet. Die Rückförderstrecke ist vorteilhafterweise pneumatisch betrieben und umfasst weiter vorzugsweise ein Gebläse. Die Rückförderstrecke ist vorzugsweise zwischen dem Schüttgutsammler bzw. dem Gehäuse einerseits und dem Schüttgutsilo bzw. einem stromaufwärtigen Ende des Schüttgutsilos andererseits angeordnet.

Es ist sehr vorteilhaft, wenn die Vorrichtung bzw. die Rückförderstrecke eine Kühleinrichtung zur Abkühlung des Schüttgutes bzw. eines Klumpen-Schüttgut-Gemisches aufweist. Vorzugsweise ist die Kühleinrichtung stromabwärts der Fördereinrichtung bzw. eines/des Schüttgutsammlers und bevorzugt stromaufwärts eines/des Schüttgutsilos angeordnet. Gemäß einer Ausführungsform ist die Kühleinrichtung zwischen einem stromabwärtigen Ende der Fördereinrichtung und einer Zellenradschleuse bzw. dem Klumpen-Schüttgut-Gemisch-Ausgang des Gehäuses angeordnet.

Es liegt im Rahmen der Erfindung, dass die Vorrichtung ein Schüttgutsilo zur Aufnahme des Schüttgutes aufweist, wobei das Schüttgutsilo ausgangsseitig mit der Streuöffnung verbunden ist. Vorzugsweise ist zwischen dem Schüttgutsilo und der Streuöffnung eine Schleuse, vorzugsweise eine Zellenradschleuse, angeordnet. Zweckmäßigerweise ist das Schüttgutsilo eingangsseitig mit der Rückförderstrecke und/oder einem Hauptsilo und/oder mit einer Nachbehandlungseinrichtung zur Gewinnung von schüttfähigem Salz aus dem salzhaltigen Wasserdampfstrom des Heizraumes verbunden.

Die Vorrichtung bzw. die Streuöffnung weist sehr bevorzugt ein Element zur Steuerung der Stromgeschwindigkeit des aus der Streuöffnung fallenden Schüttgutes auf. Das Element zur Steuerung der Stromgeschwindigkeit des aus der Streuöffnung fallenden Schüttgutes ist vorteilhafterweise zwischen dem Schüttgutsilo und der Fördereinrichtung angeordnet. Es ist bevorzugt, dass das Element zur Steuerung der Stromgeschwindigkeit des aus der Streuöffnung fallenden Schüttgutes oberhalb und bevorzugt genau oberhalb der Fördereinrichtung befindlich ist. Das Element zur Steuerung der Stromgeschwindigkeit des aus der Streuöffnung fallenden Schüttgutes umfasst beispielsweise ein Ventil bzw. eine Zellenradschleuse.

Zur Lösung der technischen Aufgabe lehrt die Erfindung ein Verfahren zum Abzug von flüssigem Salz, insbesondere mit einer erfindungsgemäßen Vorrichtung, wobei eine Salzschmelze entlang eines Ablaufes bis zu einem Ablaufende des Ablaufes fließt, wobei die Salzschmelze unterhalb des Ablaufendes auf ein Schüttgutbett auf einer Fördereinrichtung fällt.

Zweckmäßigerweise ist ein Heizraum vorgesehen, wobei der Heizraum einen Eingang zur Einführung eines salzhaltigen Stoffes aufweist. Es ist vorteilhaft, dass der Heizraum einen Brenner umfasst. Bevorzugt weisen die Heizraumwände Wandrohre auf. Gemäß einer ganz besonders bevorzugten Ausführungsform werden der Brenner und die Wandrohre so betrieben, dass Salz des salzhaltigen Stoffes auf der Innenseite der Heizraumwände kondensiert und dort zunächst erstarrt. Es ist bevorzugt, dass der Brenner und die Wandrohre derart betrieben werden, dass das an der Innenseite der Heizraumwände erstarrte Salz eine Salzwand bildet, welche so lange wächst, bis die Salzwand eine solche Wärmeisolation bewirkt, ab welcher die Oberfläche der Salzwand flüssig bleibt und eine Salzschmelze bildet, wobei die Salzschmelze die Salzwand herunterfließt und sich in einem unteren Bereich des Heizraumes bzw. am Boden des Heizraumes sammelt.

Es ist sehr bevorzugt, dass die Fördereinrichtung eine Stromrichtung definiert, wobei das Schüttgutbett auf der Fördereinrichtung und bevorzugt relativ zur Fördereinrichtung in der Stromrichtung wandert. Zweckmäßigerweise besitzt das Schüttgutbett eine solche Temperatur, so dass die Salzschmelze bis zu dem stromabwärtigen Ende der Fördereinrichtung erstarrt ist. Es ist bevorzugt, dass die Temperatur des Schüttgutbettes kleiner als 900 °C/800 °C/700 °C/ 600 °C/500 °C ist.

Gemäß einer vorteilhaften Ausführungsform tropft die Salzschmelze auf das Schüttgutbett. Vorzugsweise beträgt die Fallhöhe der Salzschmelze höchstens 2,0 m bzw. 1,5 m bzw. 1,0 m.

Nachfolgend wird die Erfindung anhand einer ein Ausführungsbeispiel darstellenden Zeichnung näher erläutert. Es zeigen in schematischer Darstellung:
- Fig. 1: einen Längsschnitt durch einen oberen Teil einer erfindungsgemäßen Vorrichtung,
- Fig. 2: eine Blockdarstellung eines unteren Teiles einer erfindungsgemäßen Vorrichtung mit einer erfindungsgemäßen Fördereinrichtung und
- Fig. 3: eine perspektivische Ansicht der Fördereinrichtung aus Fig. 2.

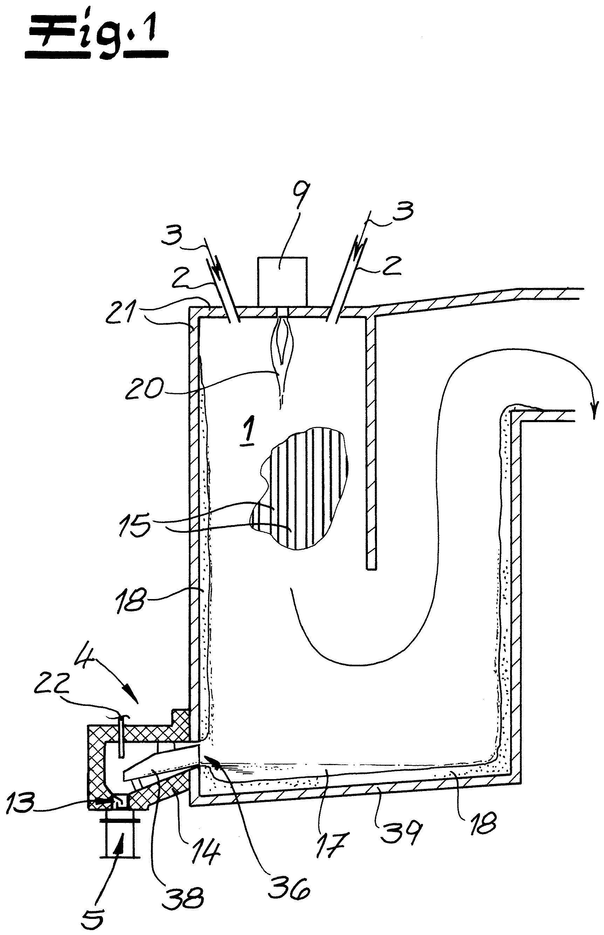

In Fig. 1 ist ein Heizraum 1 zwecks Verbrennung von salzhaltigen Stoffen 3 in Form von industriellen Abwässern gezeigt. Der salzhaltige Stoff 3 wird über mehrere Eingänge 2 zur Einführung des salzhaltigen Stoffes 3 in den Heizraum 1 eingespritzt. Die Eingänge 2 sind so ausgerichtet, dass der salzhaltige Stoff 3 auf eine Brennflamme 20 eines Brenners 9 gelenkt wird. Der salzhaltige Stoff 3 umfasst sowohl Wasser, Salz sowie brennbare Anteile. Das Wasser des salzhaltigen Stoffes 3 verdampft schlagartig aufgrund einer Brennflammentemperatur deutlich oberhalb der Schmelztemperatur des Salzes. Zugleich wird das Salz verflüssigt, so dass der Wasserdampf einen Salznebel mit sich reißt. Die brennbaren Anteile werden durch die Brennflamme 20 verbrannt, so dass der salzhaltige Stoff gereinigt wird. Aufgrund der Verbrennung der brennbaren Anteile muss dem Brenner 9 entsprechend weniger Brennstoff (z. B. Erdgas) zugeführt werden, um die gewollte Heizraumtemperatur einzustellen.

Der Heizraum 1 weist Heizraumwände 21 mit Wandrohren 15 auf, welche die Heizraumwände 21 auf einem Temperaturniveau von etwa 200 bis 300 °C halten. Hierdurch kondensiert und erstarrt der Salznebel an der Innenseite der Heizraumwände 21, so dass sich eine Salzwand 18 bildet. Die Salzwand 18 wächst etwa 20 bis 30 mm nach innen, bis die Wärmeisolierung der Salzwand 18 so groß ist, dass die Oberfläche der Salzwand 18 flüssig bleibt. Auf diese Weise fließt laufend eine Salzschmelze 17 die Salzwand 18 herunter und sammelt sich am leicht abschüssig ausgebildeten Boden 39 des Heizraumes 1. An einem ausgangsseitigen Ende des Heizraumes 1 ist ein nicht dargestelltes Gebläse angeordnet, welches den - nun in einem geringeren Umfange salzhaltigen - Wasserdampfstrom absaugt, so dass innerhalb des Heizraumes 1 ein leichter Unterdruck herrscht.

Die Salzschmelze 17 kann aufgrund des leicht abschüssigen Bodens 39 über einen Ablauf 4 aus dem Heizraum 1 abfließen. Hierzu weist eine der Heizraumwände 21 in der Nähe des Bodens 39 eine Wandöffnung 36 auf. An die Wandöffnung 36 schließt sich eine Ablaufwand 14 des Ablaufes 4 an, welche beispielsweise eine Wandstärke von 25 cm aufweist. Die Ablaufwand 14 umfasst bevorzugt ein keramisches Material in - beispielsweise - gemauerter Form. In einem oberen Bereich des Ablaufes 4 ist ein Ablaufbrenner 22 angeordnet, welcher den Innenraum des Ablaufes 4 erhitzt, so dass die Temperatur im Innenraum des Ablaufes 4 stets über der Schmelztemperatur des Salzes gehalten werden kann. Der Ablauf 4 kann ferner einen Temperatursensor aufweisen (nicht dargestellt). Der Temperatursensor kann zusammen mit dem Ablaufbrenner 22 eine Regelschleife bilden, so dass der Ablaufbrenner 22 automatisiert betätigbar ist und die Salzschmelze 17 in dem Ablauf 4 beständig und in Gänze flüssig gehalten wird. Die Salzschmelze 17 fließt entlang einer Ablaufrinne 38 aus Stahlblech innerhalb des Ablaufes 4 zu einem Ablaufende 5 hin. Das Ablaufende 5 weist einen Siphon 13 zur Vermeidung eines Außenlufteintrittes am Ablaufende 5 auf, ab welchem sich die Salzschmelze 17 dann in einem freien Fall befindet. Mit Hilfe des Siphons 13 herrscht auch in dem Ablauf 4 ein leichter Unterdruck wie im Heizraum 1, so dass ein beständiger Luftstrom durch das Ablaufende 5 hindurch in den Heizraum 1 hinein vermieden wird. Hierdurch wird eine Abkühlung im Ablauf 4 vermieden, so dass dort die Wahrscheinlichkeit von Salzablagerungen verringert wird.

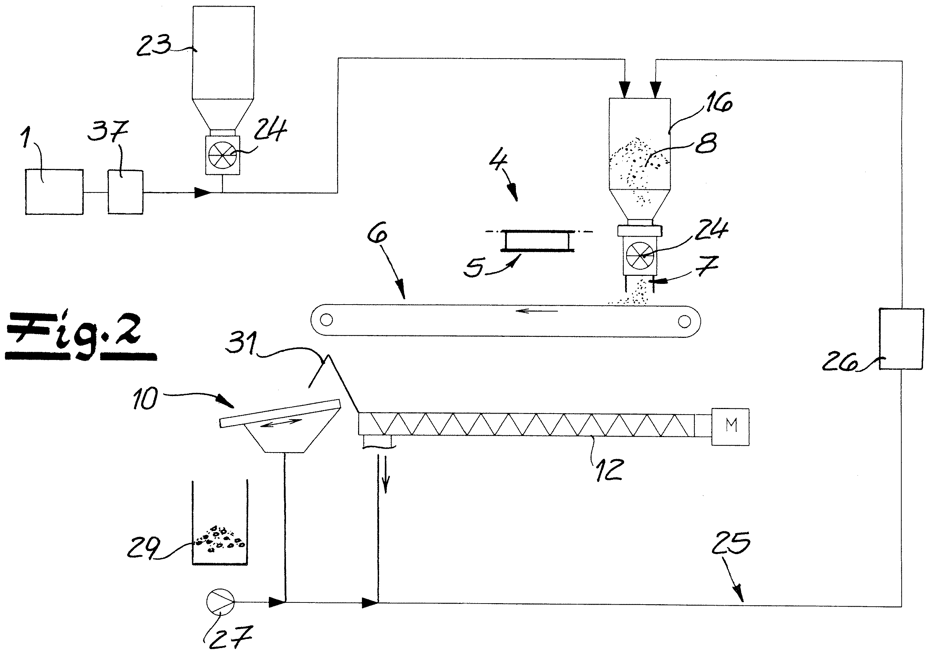

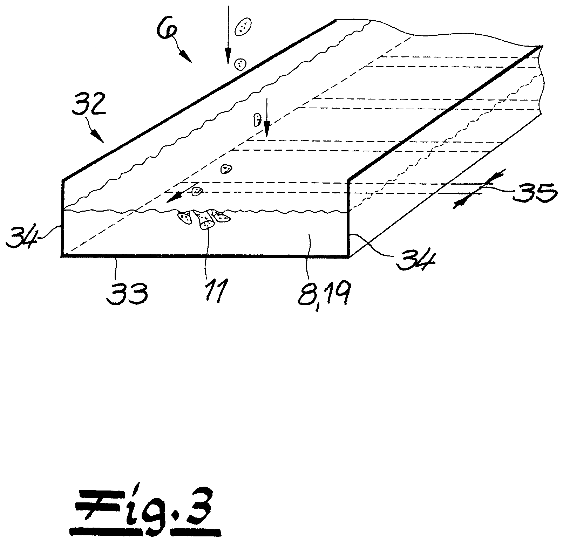

In Fig. 2 ist der untere Teil der Vorrichtung zum Abzug von flüssigem Salz in einem Blockschaubild dargestellt. Der Ablauf 4 ist hier nur angedeutet und oberhalb einer Fördereinrichtung 6 in Form eines Endlosförderbandes angeordnet. Die Fördereinrichtung 6 definiert eine Stromrichtung, welche in diesem Ausführungsbeispiel rein waagerecht verläuft. Stromaufwärts des Ablaufendes 5 ist eine Streuöffnung 7 angeordnet, aus welcher ein Schüttgut 8 auf die Fördereinrichtung 6 gestreut wird. Die Streuöffnung 7 wird gespeist von einem Schüttgutsilo 16, welches bevorzugt über eine Zellenradschleuse 24 das Schüttgut 8 an die Fördereinrichtung 6 abgibt. Die Zellenradschleuse 24 der Streuöffnung 7 ist vorzugsweise hinsichtlich der Drehzahl ansteuerbar, so dass die Zellenradschleuse 24 der Steuerung der Stromgeschwindigkeit des Schüttgutes 8 dient. Dabei ist die Stromgeschwindigkeit des aus der Streuöffnung 7 herausfallenden Schüttgutes 8 so bemessen, dass sich auf der Fördereinrichtung 6 ein Schüttgutbett 19 (s. Fig. 3) von ausreichender Höhe (beispielsweise 10 cm) bildet. Das Schüttgut 8 dieses Ausführungsbeispieles ist ein gut rieselfähiges Salz, welches vorzugsweise das gleiche Material aufweist wie dasjenige der Salzschmelze 17.

Ausweislich Fig. 3 umfasst die Fördereinrichtung 6 ein Endlosband mit einer Vielzahl an gleichartigen Elementen 32. Die gleichartigen Elemente 32 weisen jeweils einen Boden 33 auf, wobei sich die gleichartigen Elemente 32 jeweils in einem Überlappungsbereich 35 miteinander überlappen. Außerdem weist die Fördereinrichtung 6 zwei Seitenwände 34 auf, welche ortsfest sind und das Schüttgutbett 19 fixieren. Auf diese Weise ist sichergestellt, dass auch größere Schüttgutmengen und damit größere Höhen des Schüttgutbettes 19 erreicht werden. Die unterhalb des Ablaufendes 5 dann auf das Schüttgutbett 19 fließende bzw. tropfende Salzschmelze 17 erstarrt noch in dem Schüttgutbett 19, ohne den Boden 33 der gleichartigen Elemente 32 zu erreichen. Die in dem Schüttgutbett 19 erstarrte Salzschmelze 17 bildet innerhalb des Schüttgutbettes 19 Klumpen 11 erstarrter Salzschmelze.

In Fig. 2 ist weiter zu erkennen, dass ein unterhalb der Fördereinrichtung 6 angeordneter Schüttgutsammler 12 in Form einer Förderschnecke von der Fördereinrichtung 6 herunterrieselndes Schüttgut 8 sammelt und dieses zu einer Rückförderstrecke 25 befördert. Von dort kann bedarfsweise das Schüttgut 8 mittels eines Gebläses 27 über die Rückförderstrecke 25 zurück zu dem Schüttgutsilo 16 befördert werden. Entlang der Rückförderstrecke 25 befindet sich außerdem auch eine Kühleinrichtung 26, welche bei Bedarf das Schüttgut auf eine Aufgabetemperatur herunterkühlt.

Ferner kann eine Nachbehandlungseinrichtung 37 vorgesehen sein, welche dem Heizraum 1 nachgeschaltet ist. Die Nachbehandlungseinrichtung 37 zieht das im Wasserdampf verbliebene Restsalz in einer rieselfähigen Form ab. Auf diese Weise wird beständig neues Schüttgut 8 gewonnen, welches dann dem Schüttgutsilo 16 zugeführt werden kann. Es ist auch möglich, dass die Vorrichtung ein Hauptsilo 23 für Schüttgut 8 aufweist, welches im Wesentlichen als Speicher dient und bei Bedarf immer wieder eine bestimmte Menge an Schüttgut 8 an das Schüttgutsilo 16 abgeben kann.

Am Ende der Fördereinrichtung 6 fallen die Klumpen 11 und das Schüttgut 8 in eine Trennvorrichtung 10. Eine Scheidewand 31 verhindert, dass die Klumpen 11 in den Schüttgutsammler 12 fallen. Die Trennvorrichtung 10 dieses Ausführungsbeispiels ist eine leicht schräg angeordnete Schwingrinne mit einem Bodensieb, wobei die Löcher des Bodensiebes so dimensioniert sind, dass zwar das Schüttgut 8, nicht aber die Klumpen 11 erstarrter Salzschmelze hindurchfallen. Die Löcher des Bodensiebes mögen beispielsweise einen Durchmesser von 5 mm aufweisen. Durch ein Rütteln bzw. Schwingen der Schwingrinne der Trennvorrichtung 10 werden insbesondere die Klumpen 11 erstarrter Salzschmelze bis zum linken Ende der Trennvorrichtung 10 gefördert. Dort fallen die Klumpen 11 erstarrter Salzschmelze in ein Klumpenbehältnis 29. Im Falle des Klumpenbehältnisses 29 handelt es sich beispielsweise um einen Container oder um einen Big Bag. Das durch die Trennvorrichtung 10 fallende Schüttgut hingegen wird von einem Trichter eingesammelt und der Rückförderstrecke 25 zugeführt.

## Patentansprüche

1. Vorrichtung zum Abzug von flüssigem Salz, insbesondere aus Anlagen zur Reinigung von Abwässern, mit einem Heizraum (1), wobei der Heizraum (1) einen Eingang (2) zur Einführung eines salzhaltigen Stoffes (3) aufweist, wobei der Heizraum (1) mit einem Ablauf (4) für eine Salzschmelze (17) verbunden ist, wobei der Ablauf (4) ein Ablaufende (5) aufweist,
**dadurch gekennzeichnet, dass**
unterhalb des Ablaufendes (5) eine Fördereinrichtung (6) angeordnet ist, wobei die Fördereinrichtung (6) eine Stromrichtung bestimmt, wobei stromaufwärts des Ablaufendes (5) eine Streuöffnung (7) zum Bestreuen der Fördereinrichtung (6) mit einem Schüttgut (8) angeordnet ist.

2. Vorrichtung nach Anspruch 1, wobei die Fördereinrichtung (6) bzw. die Streuöffnung (7) bzw. die Vorrichtung so ausgebildet ist/sind, dass das auf die Fördereinrichtung (6) gestreute Schüttgut (8) ein, vorzugsweise in Stromrichtung wanderndes, Schüttgutbett (19) bilden kann.

3. Vorrichtung nach Anspruch 1 oder 2, wobei der Heizraum (1) mit Wandrohren (15) versehene Heizraumwände (21) aufweist.

4. Vorrichtung nach einem der Ansprüche 1 bis 3, wobei die Vorrichtung eine Scheidewand (31) umfasst, wobei die Scheidewand (31) bevorzugt unterhalb der Fördereinrichtung (6) angeordnet ist.

5. Vorrichtung nach einem der Ansprüche 1 bis 4, wobei stromabwärts des Ablaufendes (5) eine Trennvorrichtung (10) angeordnet ist, welche so ausgebildet ist, dass das Schüttgut (8) von Klumpen (11) erstarrter Salzschmelze trennbar ist.

6. Vorrichtung nach einem der Ansprüche 1 bis 5, wobei unterhalb der Fördereinrichtung (6) ein Schüttgutsammler (12) angeordnet ist.

7. Vorrichtung nach einem der Ansprüche 1 bis 6, wobei die Vorrichtung bzw. der Ablauf (4) bzw. das Ablaufende (5) einen Siphon (13) zur Vermeidung eines Außenlufteintrittes am Ablaufende (5) aufweist.

8. Vorrichtung nach einem der Ansprüche 1 bis 7, wobei der Ablauf (4) wenigstens entlang eines Abschnittes von einer Ablaufwand (14) umschlossen ist.

9. Vorrichtung nach einem der Ansprüche 1 bis 8, wobei zwischen einem stromabwärtigen Ende der Fördereinrichtung (6) und der Streuöffnung (7) eine Rückförderstrecke (25) zur Rückförderung des Schüttgutes (8) angeordnet ist.

10. Vorrichtung nach einem der Ansprüche 1 bis 9, wobei die Vorrichtung eine Kühleinrichtung (26) zur Abkühlung des Schüttgutes (8) aufweist.

11. Vorrichtung nach einem der Ansprüche 1 bis 10, wobei die Vorrichtung ein Schüttgutsilo (16) zur Aufnahme des Schüttgutes (8) aufweist, wobei das Schüttgutsilo (16) ausgangsseitig mit der Streuöffnung (7) verbunden ist.

12. Vorrichtung nach einem der Ansprüche 1 bis 11, wobei die Vorrichtung ein Element (24) zur Steuerung der Stromgeschwindigkeit des aus der Streuöffnung (7) fallenden Schüttgutes (8) aufweist.

13. Verfahren zum Abzug von flüssigem Salz, insbesondere mit einer Vorrichtung gemäß einem der Ansprüche 1 bis 12, wobei eine Salzschmelze (17) entlang eines Ablaufes (4) bis zu einem Ablaufende (5) des Ablaufes (4) fließt,
**dadurch gekennzeichnet, dass**
die Salzschmelze (17) unterhalb des Ablaufendes (5) auf ein Schüttgutbett (19) auf einer Fördereinrichtung (6) fällt.

14. Verfahren nach Anspruch 13, wobei die Fördereinrichtung (6) eine Stromrichtung definiert, wobei das Schüttgutbett (19) auf der Fördereinrichtung (6) - und bevorzugt relativ zur Fördereinrichtung (6) - in der Stromrichtung wandert.

15. Verfahren nach Anspruch 13 oder 14, wobei die Vorrichtung so ausgebildet ist, dass die Salzschmelze (17) auf das Schüttgutbett (19) tropft.
